# EUROPÄISCHE PATENTANMELDUNG

(11) **EP 2 262 091 A1**
(43) Veröffentlichungstag der Anmeldung: **15.12.2010**
(21) Anmeldenummer: 09007667.0
(22) Anmeldetag: 10.06.2009
(51) Int. Cl.: H02M 7/12, H02J 17/00, H02M 7/06

(54) **Anordnung und Verfahren zur induktiven Energieübertragung**

(71) Anmelder: Braun GmbH, 61476 Kronberg/Taunus (DE)
(72) Erfinder: Jung, Philipp, 64347 Griesheim (DE); Lepper, Joachim, 61250 Usingen (DE); Langsdorf, Christian, 61440 Oberursel (DE); Hohmann, Thomas, 63571 Gelnhausen (DE)

(57) **Zusammenfassung**

Schaltungsanordnung zum induktiven Übertragen von Energie, aufweisend: einen kapazitiven Wandler (R2,C1,D1-D4), welcher zum Bereitstellen von elektrischer Energie ausgestaltet ist, einen Oszillatorkreis (LC) zum Erzeugen und Abstrahlen eines magnetischen Wechselfeldes, mit zumindest einem Spulenelement und einem Kondensatorelement und einem ersten aktiven Element (T1), über welches dem Oszillatorkreis Energie aus dem kapazitiven Wandler eingespeist werden kann, wobei dem Oszillatorkreis ein Schaltungselement (T2) zugeordnet ist, mit welchem der Leistungsfaktor der Schaltungsanordnung veränderbar ist.

## Beschreibung

### Gebiet der Erfindung

Die Erfindung betrifft eine Anordnung und ein Verfahren zur induktiven Energieübertragung für ein elektrisches Gerät, beispielsweise für eine elektrische Zahnbürste oder für einen elektrischen Rasierapparat.

### Hintergrund der Erfindung

Elektrische akkubetriebene Geräte, beispielsweise tragbare Kleingeräte wie Zahnbürsten, Rasierapparate oder Telefone, werden üblicherweise an einer Geräte-externen Ladestation aufgeladen. Besonders beliebt sind kontaktlose Ladestationen, bei denen die Energieübertragung von der Ladestation in das Gerät über einen induktiven Übertrager erfolgt. Die zu übertragende Energie wird in der Ladestation durch einen Oszillatorkreis mit Spulenelement und Kondensatorelement gewandelt, wobei das Spulenelement üblicherweise zugleich die Primärspule des induktiven Übertragers zu dem zu ladenden Gerät bildet. Durch die Energieabgabe über das Magnetfeld wird der Oszillatorkreis gedämpft. Als Ausgleich (Entdämpfung) für die induktiv abgegebene Energie wird dem Oszillator elektrische Energie zugeführt, deren Menge über ein aktives Element (z.B. Transistor) eingestellt werden kann. Die Ladestation wird gewöhnlich als Primärseite, das zu ladende Gerät als Sekundärseite bezeichnet.

Moderne Ladestationen kennen üblicherweise drei Betriebsfälle oder -modi. Der erste Fall ist der Lade-Modus, wenn also die Sekundärseite dauerhaft Energie nachfragt. Der zweite Fall ist der einfache Standby-Modus, wenn die Sekundärseite nicht in der Nähe der Primärseite ist, das Gerät nicht an der Ladestation ist, also gar keine Energie nachgefragt wird. Der dritte Fall ist der erweiterte Standby-Modus, wenn sich die Sekundärseite zwar an der Laderstation befindet, aber vollständig geladen ist und nur "gelegentlich" (z.B. zyklisch) Energie zur Erhaltungsladung und Kompensation ihres Eigenverbrauchs benötigt. Aus Gründen der Energieeffizienz (vgl. EU-Direktive 205/32) ist es wünschenswert, die Energieaufnahme der Primärseite entsprechend dem jeweiligen Betriebsfall einzustellen.

Die Energiezufuhr in den Oszillatorkreis und damit die Energieaufnahme der primärseitigen Schaltung kann dadurch eingestellt werden, dass das aktive Element entsprechend gesteuert wird. Ist das aktive Element ein Transistor, so kann die Steuerung durch Einstellung der Basis-Emitter-Spannung bewerkstelligt werden. Allerdings ist die Steuerung des aktiven Elements in dieser Weise verhältnismäßig aufwendig und ist wenig geeignet zur Einstellung mehrer Betriebsmodi.

Der jeweilige Betriebsfall kann über den Leistungsbedarf der Sekundärseite ermittelt werden. Bekannt ist, den Leistungsbedarf der Sekundärseite direkt an der Sekundärseite zu erfassen, eine entsprechende Information an die Primärseite zu übertragen und das aktive Element anzusteuern. Diese Lösung mag sehr präzise funktionieren, ist jedoch bei induktiven Ladestationen verhältnismäßig aufwendig, weil Übertragungsmittel für die Information von der Sekundärseite zur Primärseite bereitgestellt werden müssen.

Als Alternative ist bekannt, den Leistungsbedarf der Sekundärseite dadurch zu ermitteln, dass die (primärseitige) Leistungsaufnahme des Oszillators gemessen wird und wiederum entsprechend das aktive Element gesteuert wird. Allerdings ist diese Art der Erfassung ungenau, weil Schwankungen des Leistungsbedarfs der Sekundärseite sich nicht besonders stark auf die primärseitige Leistungsaufnahme auswirken oder gar gegenüber anderen Störeffekten untergehen. Grund hierfür ist die bei Kleingeräten üblicherweise nur schwache induktive Kopplung zwischen Primärseite und Sekundärseite.

### Aufgabe der Erfindung

Aufgabe der vorliegenden Erfindung ist es, Anordnungen und Verfahren bereitzustellen, welche die Steuerung der Primärseite im oben aufgeführten Sinne entsprechend der Last der Sekundärseite ohne großen Aufwand ermöglichen.

### Erfindungsgemäße Lösung

Diese Aufgabe wird durch die Anordnungen und Verfahren gemäß den Ansprüchen gelöst.

Erfindungsgemäß bereitgestellt wird also eine Schaltungsanordnung zum induktiven Übertragen von Energie, aufweisend: Einen Oszillatorkreis zum Erzeugen und Abstrahlen eines magnetischen Wechselfeldes, mit zumindest einem Spulenelement und einem Kondensatorelement und einem aktiven Element, über welches dem Oszillatorkreis Energie aus einem kapazitiven Wandler eingespeist werden kann, wobei dem Oszillatorkreis ein Schaltungselement zugeordnet ist, mit welchem der Leistungsfaktor der Schaltungsanordnung veränderbar ist.

Über die Änderung des Leistungsfaktors der Schaltungsanordnung kann eine besonders elegante Steuerung der Energiezufuhr in die Schaltungsanordnung bewerkstelligt werden.

Vorteilhafte Weiterbildungen der Erfindung können folgende Merkmale enthalten.

Das Schaltungselement kann ausgestaltet sein zum Überbrücken des Oszillatorkreises über eine Schaltungskomponente mit vorbestimmtem ohmschem Widerstand. Dieser ohmsche Widerstand kann z.B. (nahezu) Null sein; dann handelt es sich bei der Schaltungskomponente im Wesentlichen um ein Leitungselement, das einen Kurzschluss bewirkt. Der ohmsche Widerstand kann auch einen von Null verschiedenen Wert betragen; dann handelt es sich um ein ohmsches Widerstandselement.

Das Schaltungselement kann gesteuert werden durch ein Vergleichsmittel, welches ausgestaltet ist zum Auswerten einer elektrischen Größe des Oszillatorkreises.

Die elektrische Größe kann eine Halbschwingung mit einer vorbestimmten Polarität sein.

Die elektrische Größe kann als Versorgungsspannung für das Vergleichsmittel dienen. Dann erübrigen sich anderweitige Vorkehrungen zur Bereitstellung der Versorgungsspannung für das Vergleichsmittel.

Die elektrische Größe kann eine Spannungsgröße, insbesondere eine Spannung an einem Kollektoranschluss oder an einem Basisanschluss des aktiven Elements, sein.

Der Leistungsbedarf der Sekundärseite kann von einer elektrischen Größe, die im Oszillatorkreis detektierbar ist, ermittelbar sein.

So ändert sich z.B. die Amplitude der Oszillatorschwingung verhältnismäßig stark in Abhängigkeit von der sekundärseitigen Belastung. Diese Änderung ist weitaus deutlicher und damit besser detektierbar als die Änderung des primärseitigen Leistungsbedarfs. Letztere ist, wie eingangs geschildert, ein nur ungenaues Maß für den Leistungsbedarf der Sekundärseite. Die Detektion der Amplitude der Oszillatorschwingung eignet sich daher besonders gut zur Ermittlung des Leistungsbedarfs der Sekundärseite. In die Sekundärseite selbst muss nicht eingegriffen werden. Eine besondere Betriebssituation der Sekundärseite zur Messung des Energiebedarfs wird nicht benötigt.

Die elektrische Größe kann direkt an dem aktiven Element detektiert werden. Die elektrische Größe kann z.B. die Kollektorspannung oder die Basisspannung sein.

Die maximale Amplitude oder ein Mittelwert der negativen Halbschwingung im Oszillatorkreis kann erfasst und ausgewertet werden. Diese Werte können mit einem Referenzwert verglichen werden. sie stellen ein Maß für die Güte des Oszillators dar.

Vorteilhafterweise wird die Güte des Oszillators als Kriterium für den Energiebedarf der Sekundärseite herangezogen.

Zur Verbesserung der Güte des Oszillatorkreises kann ein Diodenelement zwischen Oszillatorkreis und erstem aktiven Element vorgesehen sein.

Die Schaltungsanordnung kann den kapazitiven Wandler umfassen, welcher zum Bereitstellen der elektrischen Energie ausgestaltet ist.

Die Schaltungsanordnung kann zum induktiven Laden eines Energiespeichers, der in einem Kleingerät, insbesondere Zahnbürste oder Rasierapparat vorhanden ist, vorgesehen sein.

Die Erfindung umfasst auch ein Verfahren zum induktiven Übertragen von Energie, bei welchem in einer Schaltungsanordnung mit einem primärseitigen Oszillatorkreis ein magnetisches Wechselfeld erzeugt und an eine Sekundärseite abgestrahlt wird, wobei dem Oszillatorkreis elektrische Energie durch einen kapazitiven Wandler und ein aktives Element zugeführt wird, wobei der Leistungsfaktor der Schaltungsanordnung durch ein Schaltungselement verändert wird.

Kurzbeschreibung der Figuren

Die Erfindung wird anhand von Ausführungsbeispielen und der Zeichnung näher erläutert. In der Zeichnung zeigt:
Fig. 1 ein Blockschaltbild der vorliegenden Erfindung;
Fig. 2 eine erste Ausführungsform der Erfindung;
Fig. 3 eine zweite Ausführungsform der Erfindung; und
Fig. 4 eine dritte Ausführungsform der Erfindung;

### Ausführliche Beschreibung der Figuren

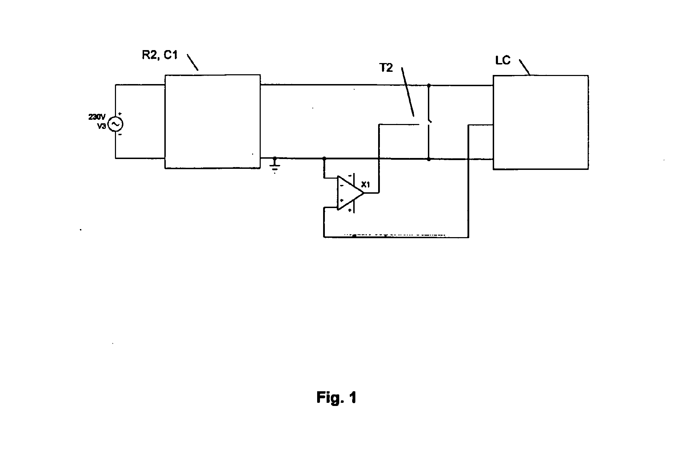

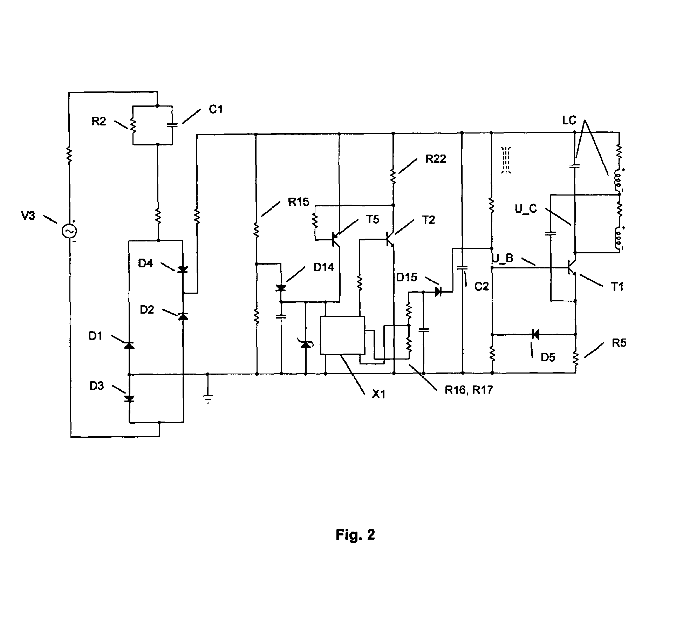

Das Blockschaltbild gemäß Fig. 1 illustriert den prinzipiellen Aufbau einer induktiven Ladestation gemäß der Erfindung. In einem selbstschwingenden Oszillatorkreis LC sind ein Kondensator C und eine Spule L angeordnet. Der Oszillatorkreis dient der Erzeugung eines magnetischen Wechselfeldes. Spule L des Oszillators dient zugleich der induktiven Übertragung von Energie aus dem Oszillatorkreis LC an eine (in der Figur nicht dargestellte) Sekundärseite. Der Oszillatorkreis bezieht elektrische Energie aus dem Netz über ein kapazitives Netzteil. Das kapazitive Netzteil, das aus dem Netz V3 gespeist wird, umfasst einen Kondensator C1 als kapazitiven Vorwiderstand und eine Gleichrichterbrücke mit Dioden D1, D2, D3, D4, vgl. Fig. 2. Die Gleichrichterbrücke erzeugt zusammen mit dem Kondensator C2 aus der Netzwechselspannung eine geglättete Gleichspannung. Mit dieser Gleichspannung wird der selbstschwingende LC-Oszillatorkreis betrieben. Die Spule des Oszillatorkreises ist wiederum der Emitter des elektromagnetischen Feldes, das vom zweiten Gerät (wiederum mit einer Spule) empfangen und einem Verbraucher zugeführt werden kann (z.B. Akkumulator).

Fig. 2 bis Fig. 4 zeigen Ausführungsformen der Erfindung in detaillierter Form.

Bei der Ausführungsform der Fig. 2 ist der Oszillatorkreis LC ein Hartley-Oszillator. Der Oszillatorkreis LC beinhaltet zur Entdämpfung (also zur Energiezufuhr) als aktives Element den Transistor T1 mit einer Rückkopplung zur Regelung des aktiven Elements. Die Anpassung des Energiebedarfs der Sekundärseite wird über einen Schluss des kapazitiven Vorwiderstands C1 gegen Masse über den Zweig aus Transistor T2 und ohmschem Widerstand R22 erreicht. Dadurch wird die Last, mit der die Schaltungsanordnung das Netz belastet, vom Wirkleistungsbereich in Richtung des Blindleistungsbereichs (im Zeigerdiagramm) verschoben und somit eine Reduzierung der Wirkleistungsaufnahme aus dem Netz bewerkstelligt. Ist der Transistor T2 vollständig durchgeschaltet, so wird der Strom in diesem Zweig im Wesentlichen durch den Widerstand R22 begrenzt. Wenn der Widerstandswert von R22 Null ist, so wird der Oszillatorkreis kurzgeschlossen und von der Energiezufuhr vollständig abgeschnitten. Das Netz erfährt dann (im Idealfall) eine rein kapazitive Blindlast.

Zur Erkennung des Energiebedarfs des Oszillatorkreises vorgesehen ist ein Vergleichsmittel X1, das als Mikrocontroller ausgestaltet ist, sowie ein Spannungsteiler, der durch die Widerstände R16 und R17 gebildet wird.

Mikrocontroller X1 und Spannungsteiler aus R16 und R17 werten den negativen Anteil der Schwingung der Oszillatorspannung aus. Dieser Pegel repräsentiert die Güte des Oszillatorkreises LC. Die Güte ändert sich, wenn über das Magnetfeld dem Oszillatorkreis LC Energie entzogen wird. Der Pegel wird mit einem Referenzwert verglichen, und das Überschreiten bzw. Unterschreiten des Referenzwerts wird ausgewertet.

An der einen Außenseite des Spannungsteilers aus R16 und R17 liegt die negative Basisspannung U_B von T1 an. Diese negative Basisspannung U_B wird über die Diode D15 herangeführt und ist repräsentativ für die Last im Oszillatorkreis LC.

An der anderen Außenseite des Spannungsteilers aus R16 und R17 liegt eine positive Referenzspannung an, die vom Mikrocontroller X1 erzeugt wird. Die Spannung am Mittenabgriff des Spannungsteilers aus R16 und R17 wird dem Mikrocontroller X1 zugeführt. Die negative Basisspannung U_B des Transistors T2 wird mittels des Spannungsteilers aus R16, R17 in den positiven Bereich transformiert, so dass sie durch den Mikrocontroller X1 verarbeitbar ist.

Der Mikrocontroller X1 steuert den Transistor T2 an. Der Mikrocontroller X1 kann so programmiert sein, dass er Zeitkonstanten zum Steuern des Transistors T2 einstellt. So lässt ich ein Steuerprogramm realisieren, mit welchem der Transistor T2 z.B. gemäß vorgegebenem Zeitschema geschaltet wird.

Der Mikrocontroller X1 ist über D14, R15 und T5 mit der Versorgungsspannung verbunden, ist also auch dann noch mit Energie versorgt, wenn die Kollektor-Emitter-Strecke von T2 durchgeschaltet ist und dem Oszillatorkreis LC mangels ausreichender Versorgungsspannung keine Energie mehr zugeführt wird.

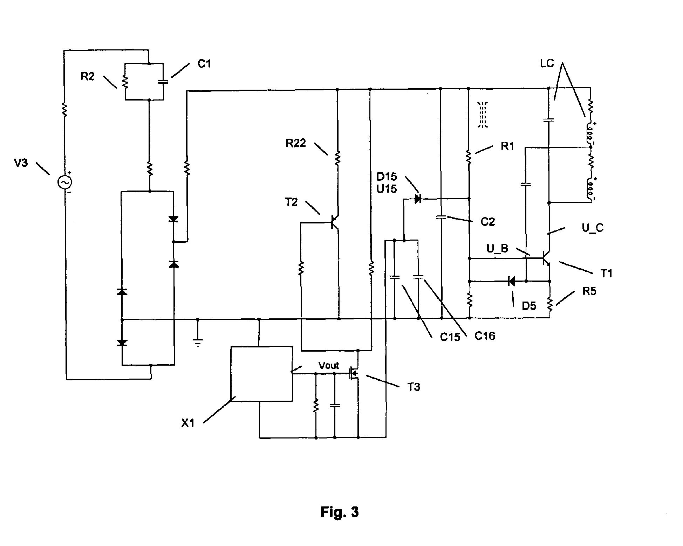

Fig. 3 illustriert eine weitere Ausführungsform, bei welcher als Vergleichsmittel X1 ein Reset-IC zum Einsatz kommt. Im Reset-IC wird die Schaltschwelle zum Durchschalten des Feldeffekt-Transistor T3 eingestellt. Die Energiezufuhr in den Oszillatorkreis wird durch Auswerten der Basisspannung von T1 eingestellt. Hierzu wird dem Reset-IC über die Diode D15 die negative Basisspannung von T1 zugeführt. Die Basis von T1 ist über seinen Emitter-Widerstand R5 und der Diode D5 mit dem Schwingkreis gekoppelt.

Steigt die Last im induktiven Wechselfeld, wird dem Oszillatorkreis über das Magnetfeld Energie entzogen, der Oszillatorkreis LC wird gedämpft, die Güte des Oszillatorkreises wird also schlechter. Die Dämpfung des Oszillatorkreises bewirkt eine Dämpfung des Pegels an der Basis von T1. Die Diode lässt nur dann einen Stromfluss durch den Zweig zu, wenn die Spannung U15 negativ ist, also die Basisspannung an T1 negativ ist. Das Reset-IC bezieht seine Versorgungsspannung ebenfalls aus diesem Zweig. Kondensatoren C15 und C16, die zwischen dem Massepotential und dem einen Anschluss der Diode D15 angeordnet sind, stellen eine Zeitkonstante ein, mit welcher sich Änderungen der Basisspannung auf das Reset-IC auswirken. Das Reset-IC funktioniert als Spannungswächter des Diodenzweigs, es gibt an seinem Ausgang Vout nur dann einen hohen Pegel aus, wenn seine Versorgungsspannung einen vorbestimmten Wert überschreitet, die Basisspannung von T1 also einen vorbestimmten Wert unterschreitet. Mit dem Pegel Vout wird der Feldeffekt-Transistor T3 angesteuert, welcher seinerseits den Transistor T2 durchschaltet. Unterschreitet die negative Basisspannung von T1 einen vorbestimmten Wert, so wird der kapazitive Widerstand C1 über den ohmschen Widerstand R22 gegen Masse geschlossen; der Oszillatorkreis LC erhält also keine elektrische Energie mehr aus dem Netzteil, und zwar so lange, bis die Spannung über C15 und C16 so weit abgeklungen ist, dass die Versorgungsspannung wieder unter einen vorbestimmten Wert gefallen ist.

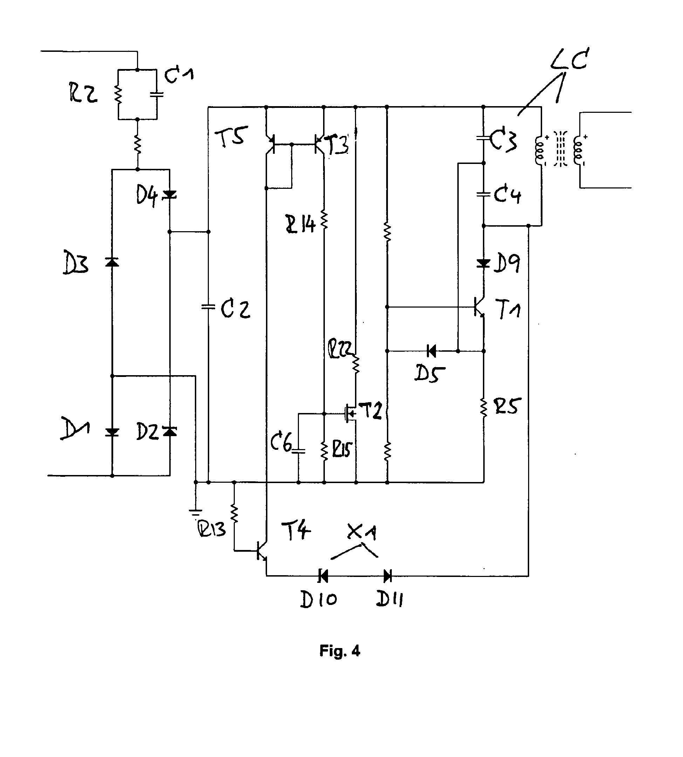

Fig. 4 illustriert eine weitere Ausführungsform der Erfindung. Auch hier wird der Oszillatorkreis LC durch ein kapazitives Netzteil gespeist. Der Oszillatorkreis LC ist ein Colpitts-Oszillator. Das Vergleichsmittel X1 umfasst eine Zener-Diode D10 und eine Diode D11. Die Schaltung ist ausgestaltet, die negative Spannungsamplitude der Schwingung im Oszillatorkreis LC zu detektieren, und zwar den betragsmäßigen Maximalwert. Der Maximalwert der negativen Spannungsamplitude des Oszillatorkreises LC wird als Maß für die Güte, also für die sekundärseitige Last, herangezogen. Fällt der Maximalwert (im Vergleich zu einem Referenzwert) ab, ist dies ein Zeichen für eine stärkere Dämpfung, also für einen höheren Energiebedarf. Wenn andererseits die negative Spannungsamplitude betragsmäßig einen vorbestimmten Wert übersteigt (z.B. maximal ist), also im Fall des unbelasteten Oszillatorkreises, wird der Zweig mit Zener-Diode D10 und Diode D11 leitend, und der Transistor T4 schaltet durch. Die Transistoren T3 und T5 können dann ebenfalls durchschalten, wenn deren Basis-Emitter-Spannungen betragsmäßig einen vorbestimmten Wert überschreiten. Die beiden Transistoren T3 und T5 steuern den Feldeffekt-Transistor T2. Wenn T2 durchschaltet, wird der kapazitive Widerstand C1 über den ohmschen Widerstand R22, der einen vorbestimmten relativ kleinen Wert hat, gegen Masse geschlossen, der Oszillatorkreis LC enthält also keine Energie mehr aus dem kapazitiven Netzteil, und das Netz wird nicht mehr belastet.

Die Diode D9 am Kollektor des Transistors T1 unterbindet einen möglichen Stromrückfluss in Sperrrichtung des Transistors T1, der zu Lasten des Diodenzweigs D10, D11 gehen würde, unterstützt also die Auswertbarkeit der negativen Spannungsamplitude im Oszillatorkreis LC und verbessert die Güte des Oszillatorkreises.

Die Erfindung umfasst auch eine Schaltungsanordnung zum induktiven Übertragen von Energie, aufweisend einen primärseitigen Oszillatorkreis zum Erzeugen und Abstrahlen eines magnetischen Wechselfeldes an eine Sekundärseite, mit zumindest einem Spulenelement und einem Kondensatorelement und einem ersten aktiven Element, über welches der Oszillatorkreis mit elektrischer Energie versorgt werden kann, wobei der Leistungsbedarf der Sekundärseite von einer elektrischen Größe, die im Oszillatorkreis detektierbar ist, ermittelbar ist.

Die Energieversorgung des Oszillatorkreises kann in Abhängigkeit von der elektrischen Größe einstellbar sein.

Die im Zusammenhang mit Fig. 4 beschriebene Diode D9 zwischen dem Oszillatorkreis LC und dem aktiven Element, also dem Transistor T1, kann in jeder Ausführungsform der Erfindung vorhanden sein.

Alle Ausführungsformen der Erfindung sind besonders geeignet zum Einsatz in induktiven Ladestationen für elektrische Kleingeräte wie elektrische Zahnbürsten, Rasierapparate oder Kommunikationsgeräte (portable Telefone).

## Patentansprüche

1. Schaltungsanordnung zum induktiven Übertragen von Energie, aufweisend:
Einen Oszillatorkreis (LC) zum Erzeugen und Abstrahlen eines magnetischen Wechselfeldes, mit zumindest einem Spulenelement und einem Kondensatorelement und einem aktiven Element (T1), über welches dem Oszillatorkreis (LC) Energie aus einem kapazitiven Wandler (C1, R2, D1, D2, D3, D4) eingespeist werden kann,
wobei dem Oszillatorkreis (LC) ein Schaltungselement (T2) zugeordnet ist, mit welchem der Leistungsfaktor der Schaltungsanordnung veränderbar ist.

2. Schaltungsanordnung gemäß Anspruch 1, wobei das Schaltungselement (T2) ausgestaltet ist zum Überbrücken des Oszillatorkreises (LC) über eine Schaltungskomponente (R22) mit vorbestimmtem ohmschem Widerstand.

3. Schaltungsanordnung gemäß Anspruch 2, wobei das Schaltungselement (T2) gesteuert wird durch ein Vergleichsmittel (X1), welches ausgestaltet ist zum Auswerten einer elektrischen Größe (U_B, U_C) des Oszillatorkreises.

4. Schaltungsanordnung gemäß Anspruch 3, wobei die elektrische Größe (U_B, U_C) eine Halbschwingung mit einer vorbestimmten Polarität ist.

5. Schaltungsanordnung gemäß Anspruch 3 oder 4, wobei die elektrische Größe (U_B, U_C) als Versorgungsspannung für das Vergleichsmittel (X1) dient.

6. Schaltungsanordnung gemäß einem der Ansprüche 3 bis 5, wobei die elektrische Größe (U_B, U_C) eine Spannungsgröße, insbesondere eine Spannung an einem Kollektoranschluss oder an einem Basisanschluss des aktiven Elements (T1) ist.

7. Schaltungsanordnung gemäß einem-der vorherigen Ansprüche, wobei der Leistungsbedarf der Sekundärseite von einer elektrischen Größe (U_B, U_C), die im Oszillatorkreis (LC) detektierbar ist, ermittelbar ist.

8. Schaltungsanordnung gemäß einem der vorherigen Ansprüche, wobei zur Verbesserung der Güte des Oszillatorkreises (LC) ein Diodenelement (D9) zwischen Oszillatorkreis (LC) und dem aktiven Element (T1) vorgesehen ist.

9. Schaltungsanordnung gemäß einem der vorherigen Ansprüche, weiter umfassend: Einen kapazitiven Wandler (C1, R2, D1, D2, D3, D4), welcher zum Bereitstellen der elektrischen Energie ausgestaltet ist.

10. Schaltungsanordnung gemäß einem der vorherigen Ansprüche, welche ausgestaltet ist zum induktiven Laden eines Energiespeichers, der in einem Kleingerät, insbesondere Zahnbürste oder Rasierapparat, angeordnet ist.

11. Verfahren zum induktiven Übertragen von Energie, bei welchem in einer Schaltungsanordnung mit einem primärseitigen Oszillatorkreis (LC) ein magnetisches Wechselfeld erzeugt und an eine Sekundärseite abgestrahlt wird, wobei dem Oszillatorkreis (LC) elektrische Energie durch einen kapazitiven Wandler (C1, R2, D1, D2, D3, D4) und ein aktives Element (T1) zugeführt wird, wobei der Leistungsfaktor der Schaltungsanordnung durch ein Schaltungselement verändert wird.

12. Verfahren gemäß Anspruch 11, wobei der Leistungsfaktor der Schaltungsanordnung durch Überbrücken des Oszillatorkreises (LC) über ein Schaltungselement mit vorbestimmtem ohmschem Widerstand verändert wird.

13. Verfahren gemäß Anspruch 11 oder 12, wobei das Schaltungselement (T2) gesteuert wird durch Auswerten einer elektrischen Größe des Oszillatorkreises.

14. Verfahren gemäß Anspruch 13, wobei die elektrische Größe eine Halbschwingung einer vorbestimmten Polarität ist.

15. Verfahren gemäß einem der Ansprüche 11 bis 14, wobei der Leistungsbedarf der Sekundärseite aus einer elektrischen Größe (U_B, U_C), die im Oszillatorkreis (LC) detektiert wird, ermittelt wird.
